# EUROPEAN PATENT APPLICATION

(11) **EP 4 708 054 A1**
(43) Date of publication of application: **11.03.2026**
(21) Application number: 23939358.0
(22) Date of filing: 14.12.2023
(51) Int. Cl.: G06F 11/14

(54) **DATA UPDATE METHOD AND APPARATUS, SYSTEM, AND STORAGE MEDIUM**

(30) Priority: 30.05.2023 CN 202310632526
(71) Applicant: Huawei Cloud Computing Technologies Co., Ltd., Guiyang, Guizhou, 550025 (CN)
(72) Inventor: QU, Daogang, Shenzhen, Guangdong 518129 (CN)
(74) Representative: Goddar, Heinz J.
(86) International application number: PCT/CN2023/138865
(87) International publication number: WO 2024/244390

(57) **Abstract**

This application discloses a data update method, apparatus, and system, and a storage medium, and pertains to the database field. The method is applied to a cloud service system, the cloud service system includes a primary site and a disaster recovery site, a primary database in the primary site includes a first primary data set, and a disaster recovery database in the disaster recovery site includes a first disaster recovery data set that is the same as the first primary data set. The method includes: modifying at least one piece of first data in the first primary data set into at least one piece of second data; generating a logical log file, where the logical log file includes first information, second information, and the at least one piece of second data, the first information indicates the first primary data set, and the second information indicates the at least one piece of first data; and sending the logical log file to the disaster recovery site, where the logical log file is used to indicate the disaster recovery site to update the at least one piece of first data in the first disaster recovery data set to the at least one piece of second data. In this application, network bandwidth resources can be saved.

## Description

This application claims priority to Chinese Patent Application No. 202310632526.0, filed with the China National Intellectual Property Administration on May 30, 2023 and entitled "DATA UPDATE METHOD, APPARATUS, AND SYSTEM, AND STORAGE MEDIUM", which is incorporated herein by reference in its entirety.

### TECHNICAL FIELD

This application relates to the database field, and in particular, to a data update method, apparatus, and system, and a storage medium.

### BACKGROUND

A cloud service system has a high requirement on data reliability. To improve reliability, a primary site is used to provide a service for a user and a disaster recovery site is used to back up the primary site. Usually, the primary site and the disaster recovery site are in different zones. In this way, when the primary site cannot provide a service due to a fault, the disaster recovery site takes over the service and continues to provide the service for a user.

The primary site includes a primary database, and the disaster recovery site includes a disaster recovery database. The primary database stores multiple rows of data, and the disaster recovery database also stores the multiple rows of data. The primary site can modify a row of data in the primary database. After the modification, the primary site can synchronize the row of modified data to the disaster recovery database. Currently, a large quantity of network bandwidth resources are wasted for synchronization of the row of data.

### SUMMARY

This application provides a data update method, apparatus, and system, and a storage medium, to save network bandwidth resources. The technical solutions are as follows.

According to a first aspect, this application provides a data update method. The method is applied to a cloud service system, the cloud service system includes a primary site and a disaster recovery site, a primary database in the primary site includes a first primary data set, the first primary data set is a row of data in the primary database, the first primary data set includes multiple pieces of first data, each of the multiple pieces of first data is a column of data in the row of data, and a disaster recovery database in the disaster recovery site includes a first disaster recovery data set that is the same as the first primary data set. In the method, at least one piece of first data in the first primary data set is modified into at least one piece of second data. A logical log file is generated, where the logical log file includes first information, second information, and the at least one piece of second data, the first information indicates the first primary data set, and the second information indicates the at least one piece of first data. The logical log file is sent to the disaster recovery site, where the logical log file is used to indicate the disaster recovery site to update the at least one piece of first data in the first disaster recovery data set to the at least one piece of second data.

The generated logical log file includes the first information, the second information, and the at least one piece of second data, the first information indicates the first primary data set, and the second information indicates the at least one piece of first data. In this way, the first disaster recovery data set in the disaster recovery database may be obtained based on the first information, and the at least one piece of first data that needs to be modified in the first disaster recovery data set may be obtained based on the second information, so that the logical log file may include the at least one piece of second data, and does not need to include an entire modified row of data. Therefore, a data amount of the logical log file is reduced, network bandwidth resources required for transmitting the logical log file are reduced, and network bandwidth resources are saved.

In a possible implementation, the first information includes one or more of the following information: a row identifier of a row to which the first primary data set belongs, a hash value of the first primary data set, or the first primary data set. When the first information includes the row identifier of the row to which the first primary data set belongs or the hash value of the first primary data set, a data amount of the first information is small, thereby greatly reducing the data amount of the logical log file.

In another possible implementation, the second information includes one or more of the following information: a bitmap or a column identifier of at least one column. The bitmap includes at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs. In this way, a data amount of the second information is small, thereby greatly reducing the data amount of the logical log file.

In another possible implementation, a first transaction is generated; and the at least one piece of first data in the first primary data set is modified into the at least one piece of second data based on the first transaction. The logical log file further includes a transaction identifier of the first transaction. In this way, when the primary site is faulty, a transaction set required for querying the protection site for a protection file can be obtained based on the transaction identifier of the first transaction, and the protection file can be obtained through query from the protection site.

In another possible implementation, the cloud service system further includes a protection site, and a transmission delay between the primary site and the protection site is less than a delay threshold. A first protection file is generated. A file header of the first protection file includes a first transaction set, a payload of the first protection file includes the first information, the second information, and the at least one piece of second data, the first transaction set includes a transaction identifier of at least one transaction, and the at least one transaction is a transaction generated before the first transaction. The first protection file is sent to the protection site, for the protection site to store the first protection file.

In another possible implementation, the primary database further includes a second primary data set, the second primary data set includes multiple pieces of third data, and the disaster recovery database further includes a second disaster recovery data set that is the same as the second primary data set. A second transaction is generated. The second transaction is a next transaction of the first transaction. At least one piece of third data in the second primary data set is modified into at least one piece of fourth data based on the second transaction. A second protection file is generated. A file header of the second protection file includes a second transaction set, a payload of the second protection file includes third information, fourth information, and the at least one piece of fourth data, the third information indicates the second primary data set, the fourth information indicates the at least one piece of third data, and the second transaction set includes the first transaction set and the transaction identifier of the first transaction. The second protection file is sent to the protection site, for the protection site to store the second protection file.

In this way, after the second protection file is sent, when the primary site is faulty, the disaster recovery site can obtain the second transaction set based on the transaction identifier of the first transaction in the logical log file, obtain the second protection file from the protection site based on the second transaction set, and modify the at least one piece of third data in the second disaster recovery data set into the at least one piece of fourth data based on the second protection file. Therefore, the second protection file can be quickly obtained based on the transaction set in the file header, and data loss is avoided based on the second protection file.

In another possible implementation, the primary site and the protection site are located in a same server room, or the primary site and the protection site are located in different server rooms in a same availability zone. In this way, it is ensured that the transmission delay between the primary site and the protection site is less than the delay threshold.

According to a second aspect, this application provides a data update method. The method is applied to a cloud service system, the cloud service system includes a primary site and a disaster recovery site, a primary database in the primary site includes a first primary data set, the first primary data set is a row of data in the primary database, the first primary data set includes multiple pieces of first data, each of the multiple pieces of first data is a column of data in the row of data, and a disaster recovery database in the disaster recovery site includes a first disaster recovery data set that is the same as the first primary data set. In the method, a logical log file is received. The logical log file includes first information, second information, and at least one piece of second data, the first information indicates the first primary data set, and the second information indicates at least one piece of first data in the first primary data set. The at least one piece of first data in the first primary data set is modified into the at least one piece of second data. The at least one piece of first data in the first disaster recovery data set is updated to the at least one piece of second data based on the logical log file.

The received logical log file includes the first information, the second information, and the at least one piece of second data, the first information indicates the first primary data set, and the second information indicates the at least one piece of first data. In this way, the first disaster recovery data set in the disaster recovery database may be obtained based on the first information, and the at least one piece of first data that needs to be modified in the first disaster recovery data set may be obtained based on the second information, so that the logical log file may include the at least one piece of second data, and does not need to include an entire modified row of data. Therefore, a data amount of the logical log file is reduced, network bandwidth resources required for transmitting the logical log file are reduced, and network bandwidth resources are saved.

In a possible implementation, the first information includes one or more of the following information: a row identifier of a row to which the first primary data set belongs, a hash value of the first primary data set, or the first primary data set. When the first information includes the row identifier of the row to which the first primary data set belongs or the hash value of the first primary data set, a data amount of the first information is small, thereby greatly reducing the data amount of the logical log file.

In another possible implementation, the second information includes one or more of the following information: a bitmap or a column identifier of at least one column. The bitmap includes at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs. In this way, a data amount of the second information is small, thereby greatly reducing the data amount of the logical log file.

In another possible implementation, the first logical log file further includes a transaction identifier of a first transaction. The first transaction is allocated based on the transaction identifier of the first transaction. The at least one piece of first data in the first disaster recovery data set is updated to the at least one piece of second data based on the first information, the second information, and the first transaction.

In another possible implementation, the cloud service system further includes a protection site, a transmission delay between the primary site and the protection site is less than a delay threshold, the primary database further includes a second primary data set, the second primary data set includes multiple pieces of third data, the disaster recovery database further includes a second disaster recovery data set that is the same as the second primary data set, the protection site stores a second protection file, a file header of the second protection file includes a second transaction set, a payload of the second protection file includes third information, fourth information, and at least one piece of fourth data, the third information indicates the second primary data set, the fourth information indicates at least one piece of third data in the second primary data set, the at least one piece of third data in the second primary data set is modified into the at least one piece of fourth data, and the second transaction set includes the transaction identifier of the first transaction and a transaction identifier of at least one transaction that occurs before the first transaction. When the primary site is faulty, the second transaction set is obtained based on the transaction identifier of the first transaction included in the logical log file. The second protection file whose file header includes the second transaction set is obtained from the protection site. The at least one piece of third data in the second disaster recovery data set is updated to the at least one piece of fourth data based on the payload of the second protection file.

The second transaction set is obtained based on the transaction identifier of the first transaction in the logical log file, the second protection file is obtained from the protection site based on the second transaction set, and the at least one piece of third data in the second disaster recovery data set is modified into the at least one piece of fourth data based on the second protection file. Therefore, the second protection file can be quickly obtained based on the transaction set in the file header, and data loss is avoided based on the second protection file.

In another possible implementation, the primary site and the protection site are located in a same server room, or the primary site and the protection site are located in different server rooms in a same availability zone. In this way, it is ensured that the transmission delay between the primary site and the protection site is less than the delay threshold.

According to a third aspect, this application provides a data update apparatus, configured to perform the method in any one of the first aspect or the possible implementations of the first aspect. Specifically, the apparatus includes units configured to perform the method in any one of the first aspect or the possible implementations of the first aspect.

According to a fourth aspect, this application provides a data update apparatus, configured to perform the method in any one of the second aspect or the possible implementations of the second aspect. Specifically, the apparatus includes units configured to perform the method in any one of the second aspect or the possible implementations of the second aspect.

According to a fifth aspect, this application provides a computing device cluster. The computing device cluster includes at least one computing device, each of the at least one computing device includes at least one processor and at least one memory, the at least one memory stores computer readable instructions, and the at least one processor executes the computer readable instructions, for the computing device cluster to perform the method in any one of the first aspect, the second aspect, the possible implementations of the first aspect, or any two possible implementations of the first aspect.

According to a sixth aspect, this application provides a computer program product. The computer program product includes a computer program stored in a computer-readable storage medium, and the computer program is loaded by a processor to implement the method in any one of the first aspect, the second aspect, the possible implementations of the first aspect, or the possible implementations of the second aspect.

According to a seventh aspect, this application provides a computer-readable storage medium, configured to store a computer program. The computer program is loaded by a processor to perform the method in any one of the first aspect, the second aspect, the possible implementations of the first aspect, or the possible implementations of the second aspect.

According to an eighth aspect, this application provides a chip, including a memory and a processor. The memory is configured to store computer instructions, and the processor is configured to invoke the computer instructions from the memory and run the computer instructions, to perform the method in any one of the first aspect, the second aspect, the possible implementations of the first aspect, or the possible implementations of the second aspect.

According to a ninth aspect, this application provides a data update system, including the apparatus according to the third aspect and the apparatus according to the fourth aspect.

### BRIEF DESCRIPTION OF DRAWINGS

FIG. 1 is a diagram of a structure of a cloud service system according to an embodiment of this application;
FIG. 2 is a diagram of a structure of another cloud service system according to an embodiment of this application;
FIG. 3 is a flowchart of a data update method according to an embodiment of this application;
FIG. 4 is a flowchart of another data update method according to an embodiment of this application;
FIG. 5 is a diagram of a structure of a data update apparatus according to an embodiment of this application;
FIG. 6 is a diagram of a structure of another data update apparatus according to an embodiment of this application;
FIG. 7 is a diagram of a structure of a computing device according to an embodiment of this application;
FIG. 8 is a diagram of a structure of a computing device cluster according to an embodiment of this application;
FIG. 9 is a diagram of a structure of another computing device cluster according to an embodiment of this application;
FIG. 10 is a diagram of a structure of another computing device according to an embodiment of this application;
FIG. 11 is a diagram of a structure of another computing device cluster according to an embodiment of this application; and
FIG. 12 is a diagram of a structure of another computing device cluster according to an embodiment of this application.

### DESCRIPTION OF EMBODIMENTS

The following further describes in detail embodiments of this application with reference to accompanying drawings.

In descriptions of this application, it should be noted that terms "first" and "second" are merely intended for a purpose of description, and shall not be understood as an indication or implication of relative importance. In the descriptions of this application, it should be noted that, unless otherwise explicitly specified and limited, "include", "have", and any other variant thereof are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. For a person of ordinary skill in the art, a specific meaning of the foregoing terms in this application may be understood based on a specific situation. In addition, in the descriptions of this application, unless otherwise stated, "multiple" means two or more. The term "and/or" describes an association relationship between associated objects and represents that three relationships may exist. For example, A and/or B may represent the following three cases: Only A exists, both A and B exist, and only B exists. The character "/" generally indicates an "or" relationship between associated objects before and after the character.

For ease of understanding the solutions in embodiments of this application, the following first explains technical terms in this specification.

A primary database is a database in a primary site. The primary site provides a service for a user via the primary database.

A disaster recovery database is a database in a disaster recovery site and is used to back up the primary database. When the primary site is faulty, the disaster recovery site provides the service for the user via the disaster recovery database.

A binlog, also referred to as a logical log file, is a type of log file, and is used to record a row of data before and after modification when the modification occurs in the row of data in the primary database.

A payload is a part other than a file header in the logical log file, and is a file content part of the logical log file.

A transaction is used to describe an operation sequence for operating a database. The operation sequence includes at least one operation for operating the database. The at least one operation described by the transaction is either all executed or none executed, and is an indivisible work unit.

A transaction identifier is used to identify a transaction.

A protection site is a cluster or server whose transmission delay with the primary site is less than a delay threshold, and is configured to provide a backup service for a logical log file generated by the primary site.

More systems have high requirements on data reliability and availability. To ensure high service availability, the primary site is used to provide services, and the disaster recovery site is used to back up the primary site. The primary site and the disaster recovery site are located in two different zones. When the primary site is faulty due to a disaster, the disaster recovery site quickly takes over the services to ensure service availability.

The primary site includes the primary database, and the disaster recovery site includes the disaster recovery database. The disaster recovery database is used to back up the primary database. The primary database includes multiple rows of data, each row of data includes multiple pieces of data, and the multiple pieces of data belong to different columns. The disaster recovery database also includes the multiple rows of data.

The primary site can modify a row of data in the primary database. Usually, the primary site modifies a part of the data in the row of data. After the modification is completed, the primary site needs to send a logical log file (binlog) to the disaster recovery site, and the logical log file includes the row of data before and after the modification. The disaster recovery site receives the logical log file, determines, based on the row of data before the modification, the row of data stored in the disaster recovery database, and updates the row of data stored in the disaster recovery database to the row of data after the modification, for the disaster recovery database to back up the primary database.

However, the primary site usually needs a large quantity of network bandwidth resources to send logical log files to the disaster recovery site, causing a serious waste of network bandwidth resources. In addition, the primary site may further store the logical log file, and the primary site needs more storage resources to store the logical log file, causing a waste of storage resources. According to any one of the following embodiments, network bandwidth resources and storage resources may be saved.

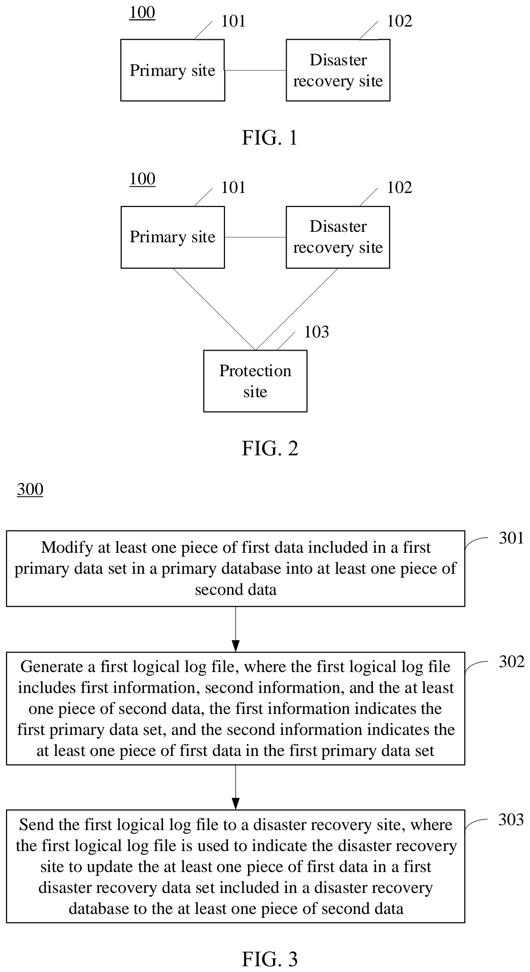

As shown in FIG. 1, an embodiment of this application provides a cloud service system 100. The cloud service system 100 includes a primary site 101 and a disaster recovery site 102. The primary site 101 may communicate with the disaster recovery site 102.

In some embodiments, the primary site 101 is located in a first availability zone, the disaster recovery site 102 is located in a second availability zone, and the first availability zone and the second availability zone may be two geographically separated availability zones.

"Geographically separated" means that the first availability zone and the second availability zone are zones in two different cities, zones in two different provinces, or zones in two different countries.

Because the first availability zone in which the primary site 101 is located and the second availability zone in which the disaster recovery site 102 is located are two geographically separated availability zones, and a distance between the primary site 101 and the disaster recovery site 102 is long, a transmission delay between the primary site 101 and the disaster recovery site 102 is large, and the transmission delay between the primary site 101 and the disaster recovery site 102 may be far greater than a delay threshold.

For example, the delay threshold is a millisecond-level threshold, and a transmission delay between the primary site 101 and the disaster recovery site 102 is at a second level. Therefore, the transmission delay between the primary site 101 and the disaster recovery site 102 may be far greater than the delay threshold. For example, it is assumed that the delay threshold may be five milliseconds, seven milliseconds, eight milliseconds, or the like, and the transmission delay between the primary site 101 and the disaster recovery site 102 may be three seconds, four seconds, five seconds, six seconds, or the like. The transmission delay is far greater than the time threshold.

In some embodiments, the primary site 101 and the disaster recovery site 102 may be different clusters (for example, may be different data centers). The primary site 101 includes at least one computing device, and the disaster recovery site 102 includes at least one computing device.

As shown in FIG. 1, the primary site 101 further includes a primary database, and the disaster recovery site 102 further includes a disaster recovery database. The disaster recovery database is a backup database of the primary database, and the disaster recovery database is used to back up the primary database.

The primary site 101 further includes at least one service, and the primary site 101 is configured to run the at least one service. The disaster recovery site 102 further includes the at least one service. When the primary site 101 is normal, the primary site 101 runs the at least one service, obtains data of the at least one service in a process of running the at least one service, and stores the data in the primary database.

When the primary site 101 is normal, the disaster recovery site 102 backs up the data stored in the primary database. In other words, the primary site 101 needs to store the data stored in the primary database to the disaster recovery database in the disaster recovery site 102. In this way, when the primary site 101 is faulty, the disaster recovery site 102 takes over the at least one service, and runs the at least one service based on the data stored in the disaster recovery database.

For any row of data in the primary database, for ease of description, the row of data is referred to as a first primary data set. In other words, the primary database includes the first primary data set. Similarly, the disaster recovery database includes a first disaster recovery data set that is the same as the first primary data set. The first primary data set includes multiple pieces of first data, and the multiple pieces of first data are multiple columns of data in the row of data.

The primary site 101 may modify at least one piece of first data in the first primary data set, and modify the at least one piece of first data into at least one piece of second data.

In some embodiments, before modifying the at least one piece of first data in the first primary data set, the primary site 101 generates a first transaction, and modifies the at least one piece of first data in the first primary data set based on the first transaction.

To enable the disaster recovery database to back up the primary database, the at least one piece of first data in the first disaster recovery data set in the disaster recovery database also needs to be modified into the at least one piece of second data. During implementation,

The primary site 101 generates a first logical log file, where the first logical log file includes first information, second information, and the at least one piece of second data, the first information indicates the first primary data set, and the second information indicates the at least one piece of first data in the first primary data set; and sends the first logical log file to the disaster recovery site 102.

The disaster recovery site 102 receives the first logical log file, and updates, based on the first logical log file, the at least one piece of first data in the first disaster recovery data set included in the disaster recovery database to the at least one piece of second data.

That the first logical log file includes the first information, the second information, and the at least one piece of second data means that the first logical log file does not need to include an entire modified row of data. In this case, a data amount of the first logical log file is reduced, thereby reducing network bandwidth resources required for transmitting the first logical log file.

In some embodiments, the first logical log file further includes a transaction identifier of the first transaction, and the transaction identifier of the first transaction is obtained by the primary site 101 through addition based on a transaction identifier of a transaction allocated last time. For example, the transaction identifier of the first transaction is obtained by the primary site 101 adding an offset value to a transaction identifier of a transaction allocated last time. Assuming that the offset value is 1, and the transaction identifier of the transaction allocated last time is 9, the transaction identifier of the first transaction is 10.

Because the distance between the primary site 101 and the disaster recovery site 102 is long, it takes a long time for the primary site 101 to send the first logical log file completely. For example, it may take the primary site 101 two to three seconds to send the first logical log file completely, or it may take the primary site 101 a longer time to send the first logical log file completely.

A fault may occur in the primary site 101 before the primary site 101 sends the first logical log file completely. As a result, the disaster recovery site 102 cannot receive the first logical log file, and the disaster recovery site 102 cannot further update the at least one piece of first data in the first primary data set included in the disaster recovery database to the at least one piece of second data.

As shown in FIG. 2, the cloud service system 100 further includes a protection site 103. The protection site 103 may separately communicate with the primary site 101 and the disaster recovery site 103. A transmission delay between the primary site 101 and the protection site 103 is less than a delay threshold.

In some embodiments, a network bandwidth between the primary site 101 and the protection site 103 is also large. Optionally, a network bandwidth between the primary site 101 and the protection site 103 is greater than a bandwidth threshold, so that the primary site 101 can send data to the protection site 103 as quickly and early as possible.

In some embodiments, the primary site 101 may further generate a first protection file, where a file header of the first protection file includes a first transaction set, a payload of the first protection file includes the first information, the second information, and the at least one piece of second data, the first transaction set includes a transaction identifier of at least one transaction, and the at least one transaction is a transaction generated before the first transaction; and send the first protection file to the protection site 103.

The protection site 103 receives the first protection file, and stores the first protection file.

The primary site 101 generates the first logical log file and the first protection file concurrently. Therefore, the primary site 101 may obtain the first logical log file and the first protection file at the same time.

Because it takes the primary site 101 a very short time to send the first protection file to the protection site 103, the primary site 101 has successfully sent the first protection file to the protection site 103 after the first protection file is generated and before the primary site 101 is faulty.

In this way, when the first logical log file is not successfully sent to the disaster recovery site 102 before the primary site 101 is faulty, the disaster recovery site 102 may query, based on the first transaction set, the protection site 103 for the first protection file whose file header includes the first transaction set, and update, based on the payload of the first protection file, the at least one piece of first data in the first disaster recovery data set included in the disaster recovery database to the at least one piece of second data.

In some embodiments, the protection site 103 may be a cluster, a server, or the like.

An embodiment of this application provides a data update method 300. The method 300 is applied to the cloud service system 100 shown in FIG. 1 or FIG. 2. A primary site in the cloud service system 100 includes a primary database, the primary database includes a first primary data set, the first primary data set is a row of data in the primary database, the first primary data set includes multiple pieces of first data, and the multiple pieces of first data are multiple columns of data included in the row of data. The disaster recovery site in the cloud service system 100 includes a disaster recovery database, and the disaster recovery database includes a first disaster recovery data set that is the same as the first primary data set. As shown in FIG. 3, the method 300 includes the following procedure to update data.

Step 301: Modify at least one piece of first data included in the first primary data set in the primary database into at least one piece of second data.

In step 301, a modification request from a user is received, and the modification request is used to request to modify the at least one piece of first data in the first primary data set into the at least one piece of second data. The first primary data set in the primary database is determined based on the modification request, and the at least one piece of first data in the first primary data set is modified into the at least one piece of second data.

In some embodiments, after the modification request is received, a first transaction is generated, a transaction identifier of the first transaction is allocated, and the at least one piece of first data in the first primary data set is modified into the at least one piece of second data based on the first transaction.

In some embodiments, the transaction identifier of the first transaction is obtained through addition based on a transaction identifier of a transaction generated last time.

For a process of modifying the at least one piece of first data in the first primary data set into the at least one piece of second data, the first transaction is used to isolate the process. To be specific, before the at least one piece of first data in the first primary data set is successfully modified into the at least one piece of second data, the at least one piece of second data is invisible, and the at least one piece of second data cannot be accessed by another user.

The following provides an example. Refer to a primary database shown in Table 1, the primary database is a user information table. To be specific, a primary site includes the primary database shown in Table 1, and similarly, a disaster recovery database included in a disaster recovery site is also shown in Table 1.

**Table 1: User info**

| Row number | Name | Employer address | Phone number | Highest degree | Occupation | Employer |
|---|---|---|---|---|---|---|
| 1 | Name1 | Address 1 | Phone 1 | Bachelor's degree | Engineer | Enterprise 1 |
| 2 | Name2 | Address2 | Phone2 | Master's degree | Receptionist | Enterprise2 |
| 3 | Name3 | Address3 | Phone3 | Doctoral degree | Department manager | Enterprise3 |
| ... | ... | ... | ... | ... | ... | ... |

It is assumed that a first primary data set is a row of data whose row number is 2 in the primary database shown in Table 1. The first primary data set includes multiple pieces of first data, and the multiple pieces of first data are respectively a row number "2", a name "Name2", an employer address "Address2", a phone number "Phone2", a highest degree "Master's degree", an occupation "Receptionist", and an employer "Enterprise2".

It is assumed that, for the employer "Enterprise2" and the employer address "Address2" in the row of data whose row number is "2", the user needs to request to modify the employer "Enterprise2" and the employer address "Address2" into "Enterprise4" and "Address4" respectively. In other words, the at least one piece of first data that needs to be modified in the first primary data set includes the employer address "Address2" and the employer "Enterprise2". The user sends a modification request, and the modification request includes the row number 2, the employer "Enterprise4", and the employer address "Address4". For example, the modification request may be a structured query language (structured query language, SQL) statement shown as follows:

```
         Update User info
         Set employer address=Address4, employer=Enterprise4
         Where name=Name2.
```

It is assumed that a transaction identifier of a transaction generated last time is 9. After the modification request is received, a first transaction is generated, and a transaction identifier "10" of the first transaction is obtained by adding 1 to the transaction identifier "9" of the transaction generated last time. Based on the modification request, a first primary data set (the row of data whose row number is "2" in Table 1) in the primary database shown in Table 1 is determined based on the first transaction, the employer address "Address2" included in the first primary data set is modified into "Address4", and the employer "Enterprise2" included in the first primary data set is modified into "Enterprise4", to obtain a primary database shown in Table 2 below.

**Table 2: User info**

| Row number | Name | Employer address | Phone number | Highest degree | Occupation | Employer |
|---|---|---|---|---|---|---|
| 1 | Name1 | Address 1 | Phone 1 | Bachelor's degree | Engineer | Enterprise 1 |
| 2 | Name2 | Address4 | Phone2 | Master's degree | Receptionist | Enterprise4 |
| 3 | Name3 | Address3 | Phone3 | Doctoral degree | Department manager | Enterprise3 |
| ... | ... | ... | ... | ... | ... | ... |

Step 302: Generate a first logical log file, where the first logical log file includes first information, second information, and the at least one piece of second data, the first information indicates the first primary data set, and the second information indicates the at least one piece of first data in the first primary data set.

In step 302, when the at least one piece of first data in the first primary data set is modified into the at least one piece of second data, the first logical log file is generated.

In some embodiments, the first information includes one or more of the following information: a row identifier of a row to which the first primary data set belongs, a hash value of the first primary data set, or the first primary data set.

The hash value of the first primary data set is obtained by performing a hash operation on the first primary data set. Optionally, each row of data in some primary databases may have no row identifier. In this case, the first information is the hash value of the first primary data set or the first primary data set.

In some embodiments, the second information includes one or more of the following information: a bitmap or a column identifier of at least one column. The bitmap includes at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs.

Because the second information may be the bitmap and/or the column identifier of the at least one column, a data amount of the first logical log file may be reduced.

Because the first information may be the row identifier of the row to which the first primary data set belongs and/or the hash value of the first primary data set, the data amount of the first logical log file may be further reduced.

In some embodiments, the first logical log file is stored in the primary site. Because the data amount of the first logical log file is reduced, storage resources required for storing the first logical log file are reduced. Optionally, the primary site may periodically upload a stored logical log file to a file storage system for the user to download the logical log file from the file storage system.

In some embodiments, the first logical log file further includes the transaction identifier of the first transaction.

In some embodiments, when storage duration of the first logical log file reaches a duration threshold, the first logical log file is deleted from the primary site. Alternatively, a logical log file stored in the primary site is periodically deleted.

For example, in the foregoing example, after the employer address "Address2" in the first primary data set is modified into "Address4", and the employer "Enterprise2" is modified into "Enterprise4", a first logical log file is generated, where the first logical log file includes the transaction identifier "10" of the first transaction, first information, second information, the employer address "Address4", and the employer "Enterprise4". The first information is a row identifier of a row to which the first primary data set belongs, and the row identifier is the row number "2". The second information is a bitmap, and the bitmap is 0010001. The bitmap includes two first bits "1" corresponding to two pieces of first data that need to be modified, and five second bits "0" corresponding to five pieces of first data that do not need to be modified. The two pieces of first data are the employer address "Address2" and the employer "Enterprise2", and the five pieces of data are the row number "2", the name "Name2", the phone number "Phone2", the highest degree "Master's degree", and the occupation "Receptionist".

In some embodiments, a first protection file may be further generated, where a file header of the first protection file includes a first transaction set, a payload of the first protection file includes the first information, the second information, and the at least one piece of second data, the first transaction set includes a transaction identifier of at least one transaction, and the at least one transaction is a transaction generated before the first transaction. Optionally, during implementation,

When the at least one piece of first data in the first primary data set is modified into the at least one piece of second data, the first protection file is generated.

In some embodiments, the first protection file further includes the transaction identifier of the first transaction.

In some embodiments, the first logical log file and the first protection file may be generated concurrently. Optionally, during implementation,

When the at least one piece of first data in the first primary data set is modified into the at least one piece of second data, a first process and a second process are started, the first logical log file is generated by using the first process, and the first protection file is generated by using the second process. Alternatively, when the primary site modifies the at least one piece of first data in the first primary data set into the at least one piece of second data, a first thread and a second thread are started, the first logical log file is generated by using the first thread, and the first protection file is generated by using the second thread.

For example, after the employer address "Address2" in the first primary data set is modified into "Address4", and the employer "Enterprise2" is modified into "Enterprise4", a first protection file is generated. A file header of the first protection file includes a first transaction set, and a payload of the first protection file includes the first information, the second information, the employer address "Address4", and the employer "Enterprise4".

The first transaction set includes transaction identifiers of nine transactions, the nine transactions are all transactions that occur before the first transaction, and the transaction identifiers of the nine transactions are transaction identifiers "1", "2", "3", "4", "5", "6", "7", "8", and "9".

Step 303: Send the first logical log file to the disaster recovery site, where the first logical log file is used to indicate the disaster recovery site to update the at least one piece of first data in the first disaster recovery data set included in the disaster recovery database to the at least one piece of second data.

Because a distance between the primary site and the disaster recovery site is long, it may take a long time to send the first logical log file completely to the disaster recovery site after the first logical log file is generated.

For example, after the first logical log file is generated, it may take two to three seconds to send the first logical log file completely to the disaster recovery site, or it may take more than three seconds to send the first logical log file completely to the disaster recovery site after the first logical log file is generated.

In some embodiments, the first protection file is sent to the protection site, for the protection site to receive the first protection file and store the first protection file.

In some embodiments, when storage duration of the first protection file reaches a duration threshold, the first protection file is deleted from the protection site. Alternatively, a protection file stored in the protection site is periodically deleted.

Because a transmission time between the primary site and the protection site is less than a delay threshold, the first protection file may be sent to the protection site in a very short time after the first protection file is generated. For example, the first protection file may be sent to the protection site within one millisecond or several milliseconds after the first protection file is generated.

In some embodiments, another row of data in the primary database may be further modified. For ease of description, the another row of data in the primary database is referred to as a second primary data set. The second primary data set includes multiple pieces of third data. The disaster recovery database includes a second disaster recovery data set that is the same as the second primary data set.

In other words, the first primary data set is a row of data in the primary database. That is, a row of data in the primary database is referred to as the first primary data set, the first primary data set includes multiple pieces of data, and the multiple pieces of data belong to different columns.

The first disaster recovery data set is a row of data that is in the disaster recovery database and that is the same as the first primary data set. That is, a row of data that is in the disaster recovery database and that is the same as the first primary data set is referred to as the first disaster recovery data set, the first disaster recovery data set includes multiple pieces of data, and the multiple pieces of data belong to different columns.

The second primary data set is another row of data in the primary database. That is, another row of data in the primary database is referred to as the second primary data set, the second primary data set also includes multiple pieces of data, and the multiple pieces of data belong to different columns.

The second disaster recovery data set is another row of data that is in the disaster recovery database and that is the same as the second primary data set. That is, another row of data that is in the disaster recovery database and that is the same as the second primary data set is referred to as the second disaster recovery data set, the second disaster recovery data set also includes multiple pieces of data, and the multiple pieces of data belong to different columns.

When a request used to request to modify at least one piece of third data in the second primary data set into at least one piece of fourth data is received, a second transaction is generated, where the second transaction is a next transaction of the first transaction, a transaction identifier of the second transaction is obtained through addition based on the transaction identifier of the first transaction, and the at least one piece of third data in the second primary data set in the primary database modified into the at least one piece of fourth data based on the second transaction.

A second logical log file and a second protection file are generated concurrently. The second logical log file includes third information, fourth information, and the at least one piece of fourth data, where the third information indicates the second primary data set, and the fourth information indicates the at least one piece of third data. A file header of the second protection file includes a second transaction set, a payload of the second protection file includes the third information, the fourth information, and the at least one piece of fourth data, and the second transaction set includes the first transaction set and the transaction identifier of the first transaction.

In some embodiments, the second logical log file further includes the transaction identifier of the second transaction, and/or the second protection file further includes the transaction identifier of the second transaction.

After the second logical log file and the second protection file are generated, because the transmission delay between the primary site and the protection site is short, after the second protection file is generated, the second protection file is successfully sent to the protection site in a very short time, for the protection site to store the second protection file.

Because a transmission delay between the primary site and the disaster recovery site is large, if the primary site is faulty after the second protection file is sent and before the second logical log file is sent or in a process of sending the second logical log file, the disaster recovery site cannot receive the second logical log file.

For example, in the foregoing example, it is assumed that the second primary data set is a row of data whose row number is 3 in the primary database shown in Table 2, the second primary data set includes multiple pieces of third data, and the multiple pieces of third data are respectively a row number "3", a name "Name3", an employer address "Address3", a phone number "Phone3", a highest degree "Doctoral degree", an occupation "Department manager", and an employer "Enterprise3".

It is assumed that for the phone number "Phone3" in the row of data whose row number is "3", the user needs to request to modify the phone number "Phone3" to "Phone4". In other words, the at least one piece of third data that needs to be modified in the second primary data set includes the phone number "Phone3". The user sends a modification request, where the modification request includes the row number "3" and the phone number "Phone4". For example, the modification request may be an SQL statement shown as follows:

```
         Update User info
         Set phone number=Phone4
         Where name=Name3.
```

It is assumed that a transaction generated last time is the first transaction, and the transaction identifier of the first transaction is 10. After the modification request is received, a second transaction is generated, and a transaction identifier "11" of the second transaction is obtained by adding 1 to the transaction identifier "10" of the first transaction. Based on the modification request, a second primary data set (the row of data whose row number is "3" in Table 2) in the primary database shown in Table 2 is determined based on the second transaction, and the phone number "Phone3" included in the second primary data set is modified into "Phone4", to obtain a primary database shown in Table 3 below.

**Table 3: User info**

| Row number | Name | Employer address | Phone number | Highest degree | Occupation | Employer |
|---|---|---|---|---|---|---|
| 1 | Name1 | Address 1 | Phone 1 | Bachelor's degree | Engineer | Enterprise 1 |
| 2 | Name2 | Address4 | Phone2 | Master's degree | Receptionist | Enterprise4 |
| 3 | Name3 | Address3 | Phone4 | Doctoral degree | Department manager | Enterprise3 |
| ... | ... | ... | ... | ... | ... | ... |

A second logical log file and a second protection file are generated concurrently, where the second logical log file includes the transaction identifier "10" of the second transaction, third information, fourth information, and the phone number "Phone4". The third information is the row number "3" of a row to which the second primary data set belongs, and the fourth information is a bitmap, where the bitmap is 0001000. A file header of the second protection file includes a second transaction set, a payload of the second protection file includes the third information, the fourth information, and the phone number "Phone4", and the second transaction set includes transaction identifiers "1", "2", "3", "4", "5", "6", "7", "8", "9", and "10".

The second protection file is sent to the protection site, for the protection site to store the second protection file. However, after the second protection file is sent, because the primary site is faulty, the primary site fails to send the second logical log file. In other words, the disaster recovery site cannot receive the second logical log file.

In this embodiment of this application, the first logical log file is generated when the at least one piece of first data in the first primary data set in the primary database is modified into the at least one piece of second data. The first logical log file includes the first information, the second information, and the at least one piece of second data, the first information indicates the first primary data set, and the second information indicates the at least one piece of first information. The first logical log file includes the first information, the second information, and the at least one piece of first data, and does not need to include an entire modified row of data, thereby reducing the data amount of the first logical log file. In this way, when the first logical log file is sent to the disaster recovery site, network bandwidth resources required for transmitting the first logical log file are reduced, thereby avoiding a waste of network bandwidth resources. Further, when the first logical log file is stored in the primary site, occupation of storage resources of the primary site is reduced.

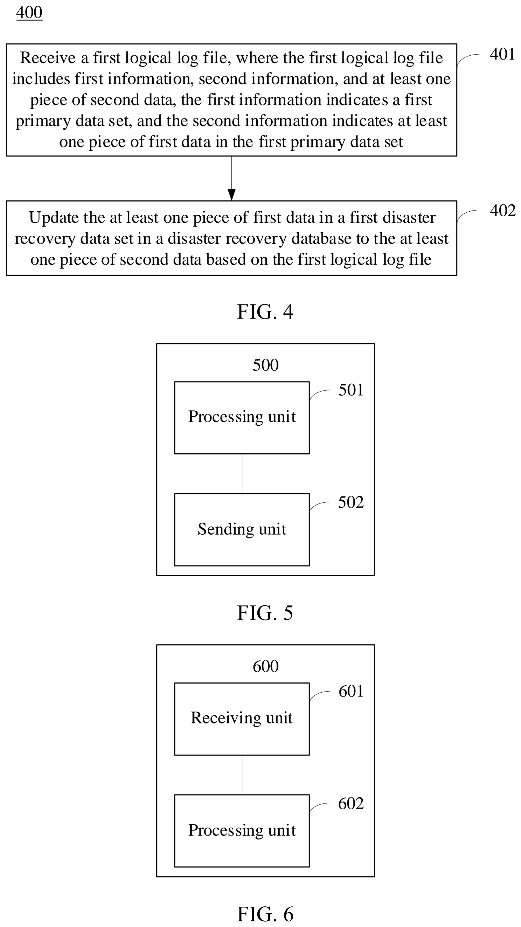

An embodiment of this application provides a data update method 400. The method 400 is applied to the cloud service system 100 shown in FIG. 1 or FIG. 2. A primary site in the cloud service system 100 includes a primary database, the primary database includes a first primary data set, the first primary data set is a row of data in the primary database, the first primary data set includes multiple pieces of first data, and the multiple pieces of first data are multiple columns of data in the row of data. The disaster recovery site in the cloud service system 100 includes a disaster recovery database, and the disaster recovery database includes a first disaster recovery data set that is the same as the first primary data set. As shown in FIG. 4, the method 400 includes the following procedure to update data.

Step 401: Receive a first logical log file, where the first logical log file includes first information, second information, and at least one piece of second data, the first information indicates the first primary data set, and the second information indicates at least one piece of first data in the first primary data set.

In some embodiments, the first information includes one or more of the following information: a row identifier of a row to which the first primary data set belongs, a hash value of the first primary data set, or the first primary data set.

The hash value of the first primary data set is obtained by performing a hash operation on the first primary data set.

In some embodiments, the second information includes one or more of the following information: a bitmap or a column identifier of at least one column. The bitmap includes at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs.

In some embodiments, the first logical log file further includes a transaction identifier of a first transaction, and the first transaction is used to modify the at least one piece of first data in first primary data information in the primary database into the at least one piece of second data.

For example, a first logical log file sent by the primary site is received, where the first logical log file includes a transaction identifier "10" of a first transaction, first information, second information, an employer address "Address4", and an employer "Enterprise4". The first information is a row identifier of a row to which a first primary data set belongs, and the row identifier is a row number "2". The second information is a bitmap, and the bitmap is 0010001.

Step 402: Update the at least one piece of first data in the first disaster recovery data set in the disaster recovery database to the at least one piece of second data based on the first logical log file.

In step 402, the first transaction is allocated based on the transaction identifier of the first transaction; and the at least one piece of first data in the first disaster recovery data set in the disaster recovery database is updated to the at least one piece of second data based on the first information, the second information, and the first transaction.

In step 402, the at least one piece of first data in the first disaster recovery data set in the disaster recovery database may be updated to the at least one piece of second data by using the following processes 4021 to 4023.

4021: Determine the first disaster recovery data set in the disaster recovery database based on the first information.

In some embodiments, the first information includes a row identifier of the first primary data set, and a row of data that is the same as the first primary data set is determined from the disaster recovery database based on the row identifier, where the row of data is the first disaster recovery data set.

For example, the disaster recovery site includes the disaster recovery database shown in Table 1, the first information includes the row identifier of the first primary data set, and the row identifier is a row number "2". Based on the row number "2", a row of data that is the same as the first primary data set is determined from the disaster recovery database shown in Table 1, and the row of data is a row of data whose row number is "2" in Table 1. In other words, the first disaster recovery data set is the row of data whose row number is "2" in Table 1.

In some embodiments, the first information includes a hash value of the first primary data set, a hash value of each row of data in the disaster recovery database is calculated, and a row of data whose hash value is the same as the hash value of the first primary data set is obtained, where the row of data is the first disaster recovery data set.

In some embodiments, the first information includes the first primary data set, a hash value of the first primary data set is calculated, a hash value of each row of data in the disaster recovery database is calculated, and a row of data whose hash value is the same as the hash value of the first primary data set is obtained, where the row of data is the first disaster recovery data set.

4022: Determine the at least one piece of first data in the first disaster recovery data set based on the second information.

In some embodiments, the second information is a bitmap, and at least one piece of first data that is in the first disaster recovery data set and that corresponds to at least one first bit is determined based on the at least one first bit in the bitmap.

For example, the first disaster recovery data set is the row of data whose row number is "2" in Table 1. The second information is a bitmap, the bitmap is 0010001, and the bitmap includes two first bits "1". Two pieces of first data that are in the first disaster recovery data set and that correspond to the two first bits "1" are determined based on the two first bits, and the two pieces of first data are an employer address "Address2" and an employer "Enterprise2".

In some embodiments, the second information is a column identifier of at least one column, and at least one piece of first data that is in the first disaster recovery data set and that belongs to the at least one column is determined based on the column identifier of the at least one column.

4023: Modify the at least one piece of first data in the first disaster recovery data set into the at least one piece of second data.

For example, the first logical log file includes two pieces of second data, and the two pieces of second data are an employer address "Address4" and an employer "Enterprise4". The employer address "Address2" included in the row of data whose row number is "2" in Table 1 is modified into "Address4", and the employer "Enterprise2" is modified into "Enterprise4", to obtain the disaster recovery database shown in Table 2.

After the first logical log file is received, it may be detected that the primary site is faulty. In this case, when the primary site is faulty, operations 11 to 13 are further performed.

11: Obtain a second transaction set based on the transaction identifier of the first transaction included in the first logical log file, where the second transaction set includes the transaction identifier of the first transaction and a transaction identifier of at least one transaction generated before the first transaction.

For example, the transaction identifier of the first transaction included in the first logical log file is "10", nine transactions are generated before the first transaction, and transaction identifiers of the nine transactions are "1", "2", "3", "4", "5", "6", "7", "8", and "9". Therefore, a second transaction set including the transaction identifiers "1", "2", "3", "4", "5", "6", of "7", "8", "9", and "10" are obtained.

12: Obtain, from a protection site, a second protection file whose file header includes the second transaction set.

In some embodiments, the protection site stores received protection files according to a receiving sequence of the protection files, so that a storage sequence of the protection files in the protection site is the same as a generation sequence of the protection files. Optionally, the second protection file and each protection file whose storage sequence position is after the second protection file may be obtained from the protection site. In this way, all required protection files are obtained at a time, thereby improving obtaining efficiency.

During implementation, an obtaining request is sent to the protection site, where the obtaining request includes the second transaction set, so that the protection site obtains the second protection file whose file header includes the second transaction set, and receives the second protection file sent by the protection site. Optionally, each protection file that is sent by the protection site and whose storage sequence position is after the second protection file is further received.

In some embodiments, the protection site may obtain, by using the following procedures (1) to (4), the second protection file whose file header includes the second transaction set.
(1): Start scanning from a protection file last stored in the protection site.
(2): Compare a transaction set included in a file header of a scanned protection file with the second transaction set, and if it is found through comparison that the two transaction sets are the same, perform (3); or if it is found through comparison that the two transaction sets are different, perform (4).
(3): Determine that the scanned protection file is the second protection file whose file header includes the second transaction set, and end returning.
(4): Scan a previous protection file and return to (2).

If it is found through comparison that the two transaction sets are the different, it is determined that the scanned protection file is not the second protection file whose file header includes the second transaction set.

A transaction set included in a file header of a protection file can be easily obtained from the file header of the protection file. In addition, a calculation amount for comparing two transaction sets is small. Therefore, the protection site may quickly obtain the second protection file from the stored protection file. In addition, the protection file is scanned in reverse order, that is, scanning is performed forward starting from the last stored protection file, so that a quantity of protection files that need to be compared can be reduced, and a rate of obtaining the second protection file can be increased.

The scanning starts from the protection file last stored in the protection site, so that a quantity of protection files that need to be compared can be reduced, and the second protection file whose file header includes the second transaction set can be quickly obtained through scanning.

The protection site further obtains each protection file whose storage sequence position is after the second protection file, and sends the second protection file and each protection file whose storage sequence position is after the second protection file. Logical log files generated concurrently with the protection file are not successfully sent to the disaster recovery site by the primary site because the primary site is faulty.

For example, the protection site stores a first protection file and a second protection file. A file header of the first protection file includes the first transaction set, the first transaction set includes the transaction identifiers "1", "2", "3", "4", "5", "6", "7", "8", and "9", and a payload of the first protection file includes first information, second information, the employer address "Address4", and the employer "Enterprise4".

A file header of the second protection file includes the second transaction set, the second transaction set includes the transaction identifiers "1", "2", "3", "4", "5", "6", "7", "8", "9", and "10", and a payload of the second protection file includes third information, fourth information, and a phone number "Phone4".

The protection site receives an obtaining request, where the obtaining request includes the second transaction set, and the second transaction set includes the transaction identifiers "1", "2", "3", "4", "5", "6", "7", "8", "9", and "10". The second transaction set is compared with a transaction set in a file header of a last protection file (the second protection file) stored in the protection site. It is found through comparison that the two transaction sets are the same, and it is determined that the last protection file is the second protection file whose file header includes the second transaction set.

13: Update at least one piece of third data in a second disaster recovery data set to at least one piece of fourth data based on a payload of the second protection file.

For a detailed implementation process of updating the at least one piece of third data in the second disaster recovery data set to the at least one piece of fourth data, refer to the foregoing processes 4021 to 4023. Details are not described herein again.

For example, the payload of the second protection file includes the third information, the fourth information, and the phone number "Phone4", where the third information is a row number "3", and the fourth information is a bitmap 0001000. A second disaster recovery data set (a row of data whose row number is "3" in Table 2) is determined in the disaster recovery database shown in Table 2 based on the row number "3", a phone number "Phone3" included in the second disaster recovery data set is determined based on a first bit "1" in the fourth information, and the phone number "Phone3" is modified into "Phone4", to obtain the disaster recovery database shown in Table 3.

For protection files whose storage sequence positions are after the second protection file, data in the disaster recovery database is updated based on payloads of the protection files and with reference to the foregoing process of 4021 to 4023.

In this embodiment of this application, the first logical log file includes first information, second information, and the at least one piece of second data, the first information indicates the first primary data set, and the second information indicates the at least one piece of first information. The first logical log file includes the first information, the second information, and the at least one piece of first data, and does not need to include an entire modified row of data, thereby reducing a data amount of the first logical log file. In this way, when the primary site sends the first logical log file, network bandwidth resources required for transmitting the first logical log file are reduced, thereby avoiding a waste of the network bandwidth resources. In addition, the second protection file can be quickly obtained through comparison of the second transaction set, and omission of data in the primary database can be avoided by using the second protection file, thereby improving efficiency of updating data in the disaster recovery database.

As shown in FIG. 5, an embodiment of this application provides a data update apparatus 500. The apparatus is used in a cloud service system. The cloud service system includes the apparatus 500 and a disaster recovery site. A primary database in the apparatus 500 includes a first primary data set. The first primary data set is a row of data in the primary database. The first primary data set includes multiple pieces of first data. Each of the multiple pieces of first data is a column of data in the row of data. A disaster recovery database in the disaster recovery site includes a first disaster recovery data set that is the same as the first primary data set. The apparatus 500 may be deployed on the primary site 101 in the cloud service system 100 shown in FIG. 1 or FIG. 2, or may be deployed on the primary site in the method 300 shown in FIG. 3. The apparatus 500 includes:
a processing unit 501, configured to modify at least one piece of first data in the first primary data set into at least one piece of second data;
the processing unit 501, further configured to generate a logical log file, where the logical log file includes first information, second information, and the at least one piece of second data, the first information indicates a first primary data set, and the second information indicates the at least one piece of first data; and
a sending unit 502, configured to send the logical log file to the disaster recovery site, where the logical log file is used to indicate the disaster recovery site to update the at least one piece of first data in the first disaster recovery data set to the at least one piece of second data.

Optionally, for a detailed implementation process in which the processing unit 501 modifies the at least one piece of first data in the first primary data set into the at least one piece of second data, refer to related content in step 301 in the method 300 shown in FIG. 3. Details are not described herein again.

Optionally, for a detailed implementation process in which the processing unit 501 generates the logical log file, refer to related content in step 302 in the method 300 shown in FIG. 3. Details are not described herein again.

Optionally, for a detailed implementation process in which the sending unit 502 sends the logical log file to the disaster recovery site, refer to related content in step 302 in the method 300 shown in FIG. 3. Details are not described herein again.

Optionally, the first information includes one or more of the following information: a row identifier of a row to which the first primary data set belongs, a hash value of the first primary data set, or the first primary data set.

Optionally, the second information includes one or more of the following information: a bitmap or a column identifier of at least one column.

The bitmap includes at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs.

Optionally, the processing unit 501 is configured to:
generate a first transaction; and
modify the at least one piece of first data in the first primary data set into the at least one piece of second data based on the first transaction, where the logical log file further includes a transaction identifier of the first transaction.

Optionally, for a detailed implementation process in which the processing unit 501 generates the first transaction and modifies the at least one piece of first data in the first primary data set into the at least one piece of second data based on the first transaction, refer to related content in step 301 in the method 300 shown in FIG. 3. Details are not described herein again.

Optionally, the cloud service system further includes a protection site, and a transmission delay between the apparatus 500 and the protection site is less than a delay threshold.

The processing unit 501 is further configured to generate a first protection file, where a file header of the first protection file includes a first transaction set, a payload of the first protection file includes the first information, the second information, and the at least one piece of second data, the first transaction set includes a transaction identifier of at least one transaction, and the at least one transaction is a transaction generated before the first transaction.

The sending unit 502 is further configured to send the first protection file to the protection site, for the protection site to store the first protection file.

Optionally, for a detailed implementation process in which the processing unit 501 generates the first protection file, refer to related content in step 302 in the method 300 shown in FIG. 3. Details are not described herein again.

Optionally, for a detailed implementation process in which the sending unit 502 sends the first protection file to the protection site, refer to related content in step 303 in the method 300 shown in FIG. 3. Details are not described herein again.

Optionally, the primary database further includes a second primary data set, the second primary data set includes multiple pieces of third data, and the disaster recovery database further includes a second disaster recovery data set that is the same as the second primary data set.

The processing unit 501 is further configured to: generate a second transaction, where the second transaction is a next transaction of the first transaction; modify at least one piece of third data in the second primary data set into at least one piece of fourth data based on the second transaction; and generate a second protection file, where a file header of the second protection file includes a second transaction set, a payload of the second protection file includes third information, fourth information, and the at least one piece of fourth data, the third information indicates the second primary data set, the fourth information indicates the at least one piece of third data, and the second transaction set includes the first transaction set and the transaction identifier of the first transaction.

The sending unit is further configured to send the second protection file to the protection site, for the protection site to store the second protection file.

Optionally, for a detailed implementation process in which the processing unit 501 generates the second transaction, modifies the at least one piece of third data in the second primary data set into the at least one piece of fourth data based on the second transaction, and generates the second protection file, refer to related content in step 303 in the method 300 shown in FIG. 3. Details are not described herein again.

Optionally, for a detailed implementation process in which the sending unit 502 sends the second protection file to the protection site, refer to related content in step 303 in the method 300 shown in FIG. 3. Details are not described herein again.

Optionally, the apparatus 500 and the protection site are located in a same server room, or the apparatus 500 and the protection site are located in different server rooms in a same availability zone.

In this embodiment of this application, the logical log file generated by the processing unit includes the first information, the second information, and the at least one piece of second data, the first information indicates the first primary data set, and the second information indicates the at least one piece of first data. In this way, the first disaster recovery data set in the disaster recovery database may be obtained based on the first information, and the at least one piece of first data that needs to be modified in the first disaster recovery data set may be obtained based on the second information, so that the logical log file may include the at least one piece of second data, and does not need to include an entire modified row of data. Therefore, a data amount of the logical log file is reduced, network bandwidth resources required by the sending unit for transmitting the logical log file are reduced, and the network bandwidth resources are saved.

As shown in FIG. 6, an embodiment of this application provides a data update apparatus 600. The apparatus 600 is used in a cloud service system. The cloud service system includes a primary site and the apparatus 600. A primary database in the primary site includes a first primary data set. The first primary data set is a row of data in the primary database. The first primary data set includes multiple pieces of first data. Each of the multiple pieces of first data is a column of data in the row of data. A disaster recovery database in the apparatus 600 includes a first disaster recovery data set that is the same as the first primary data set. The apparatus 600 may be deployed on the disaster recovery site 102 in the cloud service system 100 shown in FIG. 1 or FIG. 2, or may be deployed on the disaster recovery site in the method 400 shown in FIG. 4. The apparatus 600 includes:
a receiving unit 601, configured to receive a logical log file, where the logical log file includes first information, second information, and at least one piece of second data, the first information indicates the first primary data set, the second information indicates at least one piece of first data in the first primary data set, and the at least one piece of first data in the first primary data set is modified into the at least one piece of second data; and
a processing unit 602, configured to update the at least one piece of first data in the first disaster recovery data set to the at least one piece of second data based on the logical log file.

Optionally, for a detailed implementation process in which the receiving unit 601 receives the logical log file, refer to related content in step 401 in the method 400 shown in FIG. 4. Details are not described herein again.

Optionally, for a detailed implementation process in which the processing unit 602 updates the at least one piece of first data in the first disaster recovery data set to the at least one piece of second data based on the logical log file, refer to related content in step 402 in the method 400 shown in FIG. 4. Details are not described herein again.

Optionally, the first information includes one or more of the following information: a row identifier of a row to which the first primary data set belongs, a hash value of the first primary data set, or the first primary data set.

Optionally, the second information includes one or more of the following information: a bitmap or a column identifier of at least one column.

The bitmap includes at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs.

Optionally, the logical log file further includes a transaction identifier of a first transaction, and the processing unit 602 is configured to:
allocate the first transaction based on the transaction identifier of the first transaction; and
update the at least one piece of first data in the first disaster recovery data set to the at least one piece of second data based on the first information, the second information, and the first transaction.

Optionally, for a detailed implementation process in which the processing unit 602 allocates the first transaction based on the transaction identifier of the first transaction, refer to related content in step 402 in the method 400 shown in FIG. 4. Details are not described herein again.

Optionally, for a detailed implementation process in which the processing unit 602 updates the at least one piece of first data in the first disaster recovery data set to the at least one piece of second data based on the first information, the second information, and the first transaction, refer to related content in step 402 in the method 400 shown in FIG. 4. Details are not described herein again.

Optionally, the cloud service system further includes a protection site, a transmission delay between the primary site and the protection site is less than a delay threshold, the primary database further includes a second primary data set, the second primary data set includes multiple pieces of third data, the disaster recovery database further includes a second disaster recovery data set that is the same as the second primary data set, the protection site stores a second protection file, a file header of the second protection file includes a second transaction set, a payload of the second protection file includes third information, fourth information, and at least one piece of fourth data, the third information indicates the second primary data set, the fourth information indicates at least one piece of third data in the second primary data set, the at least one piece of third data in the second primary data set is modified into the at least one piece of fourth data, and the second transaction set includes the transaction identifier of the first transaction and a transaction identifier of at least one transaction that occurs before the first transaction.

The processing unit 602 is further configured to:
when the primary site is faulty, obtain the second transaction set based on the transaction identifier of the first transaction included in the logical log file;
obtain, from the protection site, the second protection file whose file header includes the second transaction set; and
update the at least one piece of third data in the second disaster recovery data set to the at least one piece of fourth data based on the payload of the second protection file.

Optionally, for a detailed implementation process in which the processing unit 602 obtains the second transaction set based on the transaction identifier of the first transaction included in the logical log file, refer to related content in operation 11 in the method 400 shown in FIG. 4. Details are not described herein again.

Optionally, for a detailed implementation process in which the processing unit 602 obtains, from the protection site, the second protection file whose file header includes the second transaction set, refer to related content in operation 12 in the method 400 shown in FIG. 4. Details are not described herein again.

Optionally, for a detailed implementation process in which the processing unit 602 updates the at least one piece of third data in the second disaster recovery data set to the at least one piece of fourth data based on the payload of the second protection file, refer to related content in operation 13 in the method 400 shown in FIG. 4. Details are not described herein again.

Optionally, the primary site and the protection site are located in a same server room, or the primary site and the protection site are located in different server rooms in a same availability zone.

In this embodiment of this application, the logical log file received by the receiving unit includes the first information, the second information, and the at least one piece of second data, the first information indicates the first primary data set, and the second information indicates the at least one piece of first data. In this way, the processing unit may obtain the first disaster recovery data set in the disaster recovery database based on the first information, and may obtain, based on the second information, the at least one piece of first data that needs to be modified in the first disaster recovery data set, so that the logical log file may include the at least one piece of second data, and does not need to include an entire modified row of data. Therefore, a data amount of the logical log file is reduced, network bandwidth resources required for transmitting the logical log file are reduced, and network bandwidth resources are saved.

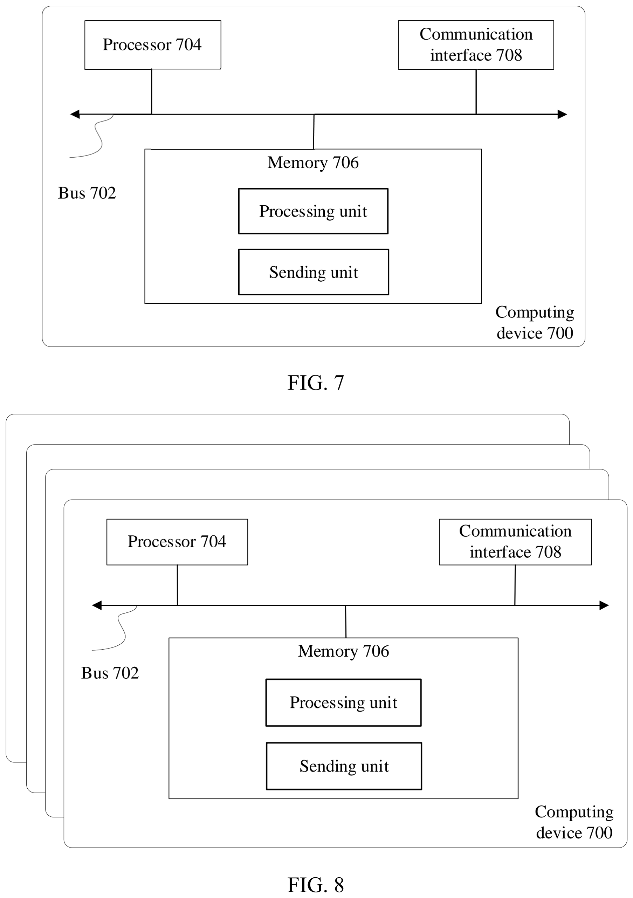

As shown in FIG. 7, an embodiment of this application provides a computing device 700. For example, the computing device 700 may be a device in the primary site in the cloud service system shown in FIG. 1 or FIG. 2, or a device in the primary site in the method 300 shown in FIG. 3.

As shown in FIG. 7, the computing device 700 includes a bus 702, a processor 704, a memory 706, and a communication interface 708. The processor 704, the memory 706, and the communication interface 708 communicate with each other through the bus 702. The computing device 700 may be a server or a terminal device. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 7, but it does not mean that there is only one bus or only one type of bus. The bus 704 may include a path for transmitting information between components (for example, the processor 704, the memory 706, and the communication interface 708) of the computing device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). Alternatively, the memory 706 may include a non-volatile memory (non-volatile memory), for example, a read-only memory (read-only memory, ROM), a flash memory, a hard disk drive (hard disk drive, HDD), or a solid-state drive (solid-state drive, SSD).

As shown in FIG. 7, the memory 706 stores executable program code, and the processor 704 executes the executable program code to separately implement functions of the processing unit 501 and the sending unit 502 in the apparatus 500 shown in FIG. 5, so as to implement the data update method 300 provided in the embodiment shown in FIG. 3. In other words, the memory 706 stores instructions for performing the data update method 300 provided in the embodiment shown in FIG. 3. Alternatively,

The communication interface 708 uses a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 8, the computing device cluster includes at least one computing device 700. Memories 706 in one or more computing devices 700 in the computing device cluster may store same instructions for performing the data update method 300 provided in the embodiment shown in FIG. 3.

In some possible implementations, each of the memories 706 in the one or more computing devices 700 in the computing device cluster may also store some instructions for performing the data update method 300 provided in the embodiment shown in FIG. 3. In other words, a combination of the one or more computing devices 700 may jointly execute instructions for performing the data update method 300 provided in the embodiment shown in FIG. 3.

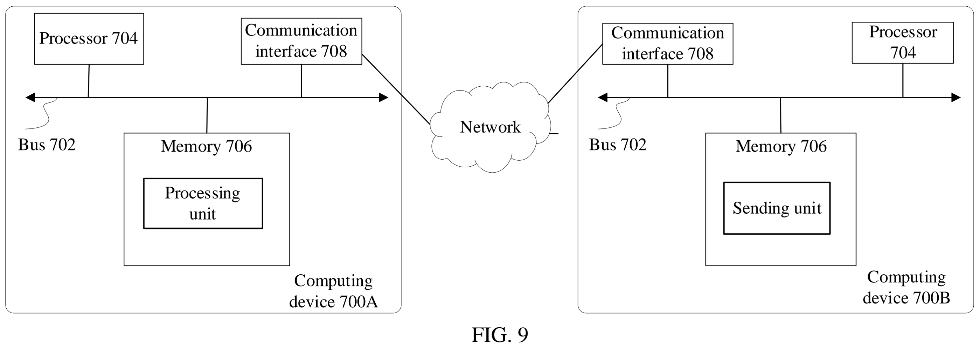

In some possible implementations, the one or more computing devices in the computing device cluster may be connected through a network. The network may be a wide area network, a local area network, or the like. FIG. 9 shows a possible implementation. As shown in FIG. 9, two computing devices 700A and 700B are connected through a network. Specifically, each computing device is connected to the network through a communication interface of the computing device.

In this possible implementation, a memory 706 in the computing device 700A stores instructions for performing a function of the processing unit 501 in the embodiment shown in FIG. 5. In addition, a memory 706 in the computing device 700B stores instructions for performing a function of the sending unit 502 in the embodiment shown in FIG. 5.

It should be understood that functions of the computing device 700A shown in FIG. 9 may alternatively be completed by multiple computing devices 700. Similarly, functions of the computing device 700B may alternatively be completed by multiple computing devices 700.

An embodiment of this application further provides another computing device cluster. For a connection relationship between computing devices in the computing device cluster, refer to the connection manner of the computing device cluster in FIG. 9 similarly. A difference is that memories 706 in one or more computing devices 700 in the computing device cluster may store same instructions for performing the data update method 300 provided in the embodiment shown in FIG. 3.

In some possible implementations, each of the memories 706 in the one or more computing devices 700 in the computing device cluster may also store some instructions for performing the data update method 300 provided in the embodiment shown in FIG. 3. In other words, a combination of the one or more computing devices 700 may jointly execute instructions for performing the data update method 300 provided in the embodiment shown in FIG. 3.

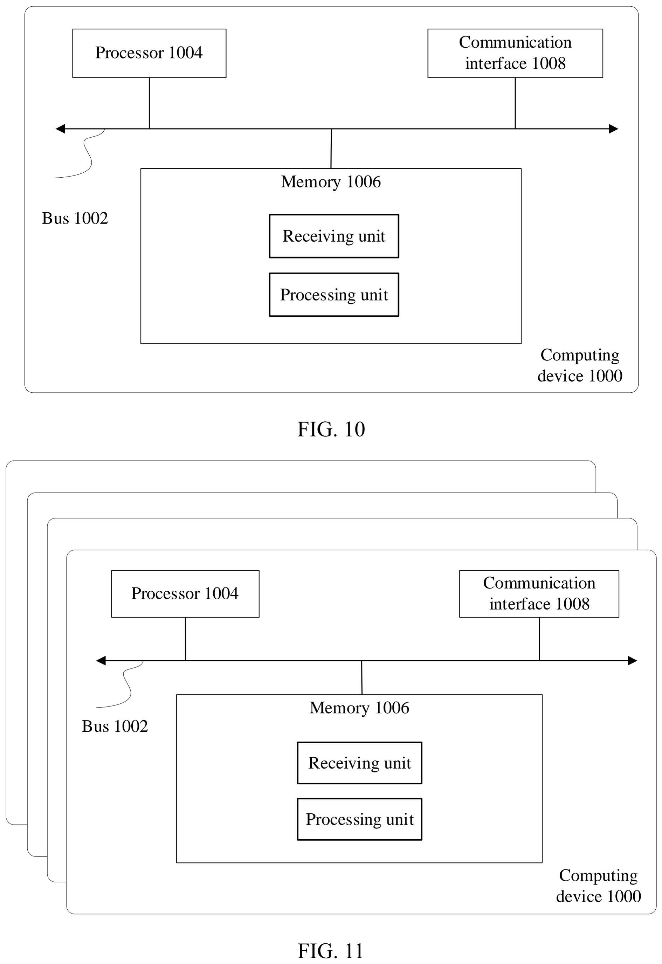

As shown in FIG. 10, an embodiment of this application provides a computing device 1000. For example, the computing device 1000 may be a device in the disaster recovery site in the cloud service system shown in FIG. 1 or FIG. 2, or a device in the disaster recovery site in the method 400 shown in FIG. 4.

As shown in FIG. 10, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a server or a terminal device. It should be understood that quantities of processors and memories in the computing device 1000 are not limited in this application.

The bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 10, but it does not mean that there is only one bus or only one type of bus. The bus 1004 may include a path for transmitting information between components (for example, the processor 1004, the memory 1006, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The memory 1006 may further include a non-volatile memory (non-volatile memory), for example, a read-only memory (read-only memory, ROM), a flash memory, a hard disk drive (hard disk drive, HDD), or a solid-state drive (solid-state drive, SSD).

As shown in FIG. 10, the memory 1006 stores executable program code, and the processor 1004 executes the executable program code to separately implement functions of the receiving unit 601 and the processing unit 602 in the apparatus 600 shown in FIG. 6, so as to implement the data update method 400 provided in the embodiment shown in FIG. 4. In other words, the memory 1006 stores instructions for performing the data update method 400 provided in the embodiment shown in FIG. 4. Alternatively,

The communication interface 1008 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 11, the computing device cluster includes at least one computing device 1000. Memories 1006 in one or more computing devices 1000 in the computing device cluster may store same instructions for performing the data update method 400 provided in the embodiment shown in FIG. 4.

In some possible implementations, each of the memories 1006 in the one or more computing devices 1000 in the computing device cluster may also store some instructions for performing the data update method 400 provided in the embodiment shown in FIG. 4. In other words, a combination of the one or more computing devices 1000 may jointly execute instructions for performing the data update method 400 provided in the embodiment shown in FIG. 4.

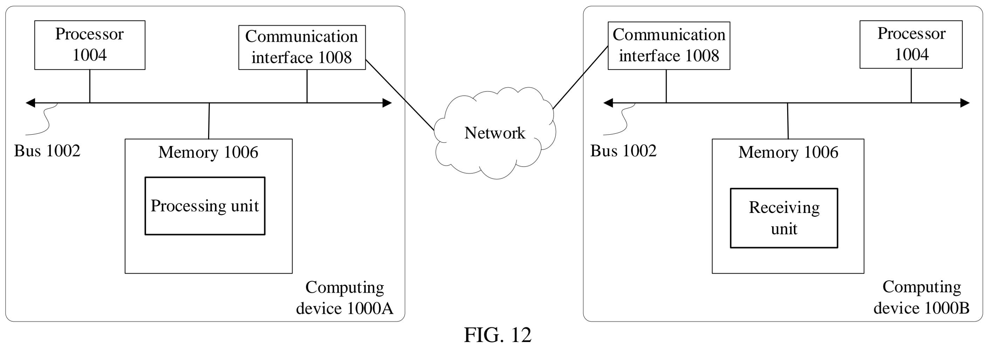

In some possible implementations, the one or more computing devices in the computing device cluster may be connected through a network. The network may be a wide area network, a local area network, or the like. FIG. 12 shows a possible implementation. As shown in FIG. 12, two computing devices 1000A and 1000B are connected through a network. Specifically, each computing device is connected to the network through a communication interface of the computing device.

In this possible implementation, a memory 1006 in the computing device 1000A stores instructions for performing a function of the processing unit 602 in the embodiment shown in FIG. 6. In addition, a memory 1006 in the computing device 1000B stores instructions for performing a function of the receiving unit 601 in the embodiment shown in FIG. 6.

It should be understood that functions of the computing device 1000A shown in FIG. 12 may alternatively be completed by multiple computing devices 1000. Similarly, functions of the computing device 1000B may alternatively be completed by multiple computing devices 1000.

An embodiment of this application further provides another computing device cluster. For a connection relationship between computing devices in the computing device cluster, refer to the connection manner of the computing device cluster in FIG. 12 similarly. A difference is that memories 1006 in one or more computing devices 1000 in the computing device cluster may store same instructions for performing the data update method 400 provided in the embodiment shown in FIG. 4.

In some possible implementations, each of the memories 1006 in the one or more computing devices 1000 in the computing device cluster may also store some instructions for performing the data update method 400 provided in the embodiment shown in FIG. 4. In other words, a combination of the one or more computing devices 1000 may jointly execute instructions for performing the data update method 400 provided in the embodiment shown in FIG. 4.

An embodiment of this application further provides a computer program product including instructions. The computer program product may be a software or program product that includes instructions and that can be run on a computing device or be stored in any usable medium. When the computer program product runs on at least one computing device, the at least one computing device is enabled to perform the data update method provided in the embodiment shown in FIG. 3 or FIG. 4.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the data update method provided in the embodiment shown in FIG. 3 or FIG. 4.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the principle of this application should fall within the protection scope of this application.

## Claims

1. A data update method, wherein the method is applied to a cloud service system, the cloud service system comprises a primary site and a disaster recovery site, a primary database in the primary site comprises a first primary data set, the first primary data set is a row of data in the primary database, the first primary data set comprises multiple pieces of first data, each of the multiple pieces of first data is a column of data in the row of data, a disaster recovery database in the disaster recovery site comprises a first disaster recovery data set that is the same as the first primary data set, and the method comprises:
modifying at least one piece of first data in the first primary data set into at least one piece of second data;
generating a logical log file, wherein the logical log file comprises first information, second information, and the at least one piece of second data, the first information indicates the first primary data set, and the second information indicates the at least one piece of first data; and
sending the logical log file to the disaster recovery site, wherein the logical log file is used to indicate the disaster recovery site to update the at least one piece of first data in the first disaster recovery data set to the at least one piece of second data.

2. The method according to claim 1, wherein the first information comprises one or more of the following information: a row identifier of a row to which the first primary data set belongs, a hash value of the first primary data set, or the first primary data set.

3. The method according to claim 1 or 2, wherein the second information comprises one or more of the following information: a bitmap or a column identifier of at least one column; and
the bitmap comprises at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs.

4. The method according to any one of claims 1 to 3, wherein the modifying the at least one piece of first data in the first primary data set into the at least one piece of second data comprises:
generating a first transaction; and
modifying the at least one piece of first data in the first primary data set into the at least one piece of second data based on the first transaction, wherein the logical log file further comprises a transaction identifier of the first transaction.

5. The method according to claim 4, wherein the cloud service system further comprises a protection site, a transmission delay between the primary site and the protection site is less than a delay threshold, and the method further comprises:
generating a first protection file, wherein a file header of the first protection file comprises a first transaction set, a payload of the first protection file comprises the first information, the second information, and the at least one piece of second data, the first transaction set comprises a transaction identifier of at least one transaction, and the at least one transaction is a transaction generated before the first transaction; and
sending the first protection file to the protection site, for the protection site to store the first protection file.

6. The method according to claim 5, wherein the primary database further comprises a second primary data set, the second primary data set comprises multiple pieces of third data, the disaster recovery database further comprises a second disaster recovery data set that is the same as the second primary data set, and after the generating the first transaction, the method further comprises:
generating a second transaction, wherein the second transaction is a next transaction of the first transaction;
modifying at least one piece of third data in the second primary data set into at least one piece of fourth data based on the second transaction;
generating a second protection file, wherein a file header of the second protection file comprises a second transaction set, a payload of the second protection file comprises third information, fourth information, and the at least one piece of fourth data, the third information indicates the second primary data set, the fourth information indicates the at least one piece of third data, and the second transaction set comprises the first transaction set and the transaction identifier of the first transaction; and
sending the second protection file to the protection site, for the protection site to store the second protection file.

7. The method according to claim 5 or 6, wherein the primary site and the protection site are located in a same server room, or the primary site and the protection site are located in different server rooms in a same availability zone.

8. A data update method, wherein the method is applied to a cloud service system, the cloud service system comprises a primary site and a disaster recovery site, a primary database in the primary site comprises a first primary data set, the first primary data set is a row of data in the primary database, the first primary data set comprises multiple pieces of first data, each of the multiple pieces of first data is a column of data in the row of data, a disaster recovery database in the disaster recovery site comprises a first disaster recovery data set that is the same as the first primary data set, and the method comprises:
receiving a logical log file, wherein the logical log file comprises first information, second information, and at least one piece of second data, the first information indicates the first primary data set, the second information indicates at least one piece of first data in the first primary data set, and the at least one piece of first data in the first primary data set is modified into the at least one piece of second data; and
updating the at least one piece of first data in the first disaster recovery data set to the at least one piece of second data based on the logical log file.

9. The method according to claim 8, wherein the first information comprises one or more of the following information: a row identifier of a row to which the first primary data set belongs, a hash value of the first primary data set, or the first primary data set.

10. The method according to claim 8 or 9, wherein the second information comprises one or more of the following information: a bitmap or a column identifier of at least one column; and
the bitmap comprises at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs.

11. The method according to any one of claims 8 to 10, wherein the logical log file further comprises a transaction identifier of a first transaction, and the updating the at least one piece of first data in the first disaster recovery data set to the at least one piece of second data based on the logical log file comprises:
allocating the first transaction based on the transaction identifier of the first transaction; and
updating the at least one piece of first data in the first disaster recovery data set to the at least one piece of second data based on the first information, the second information, and the first transaction.

12. The method according to claim 11, wherein the cloud service system further comprises a protection site, a transmission delay between the primary site and the protection site is less than a delay threshold, the primary database further comprises a second primary data set, the second primary data set comprises multiple pieces of third data, the disaster recovery database further comprises a second disaster recovery data set that is the same as the second primary data set, the protection site stores a second protection file, a file header of the second protection file comprises a second transaction set, a payload of the second protection file comprises third information, fourth information, and at least one piece of fourth data, the third information indicates the second primary data set, the fourth information indicates at least one piece of third data in the second primary data set, the at least one piece of third data in the second primary data set is modified into the at least one piece of fourth data, and the second transaction set comprises the transaction identifier of the first transaction and a transaction identifier of at least one transaction that occurs before the first transaction; and
after the receiving the logical log file, the method further comprises:
when the primary site is faulty, obtaining the second transaction set based on the transaction identifier of the first transaction comprised in the logical log file;
obtaining, from the protection site, the second protection file whose file header comprises the second transaction set; and
updating the at least one piece of third data in the second disaster recovery data set to the at least one piece of fourth data based on the payload of the second protection file.

13. The method according to claim 12, wherein the primary site and the protection site are located in a same server room, or the primary site and the protection site are located in different server rooms in a same availability zone.

14. A data update apparatus, wherein the apparatus is used to a cloud service system, the cloud service system comprises the apparatus and a disaster recovery site, a primary database in the apparatus comprises a first primary data set, the first primary data set is a row of data in the primary database, the first primary data set comprises multiple pieces of first data, each of the multiple pieces of first data is a column of data in the row of data, a disaster recovery database in the disaster recovery site comprises a first disaster recovery data set that is the same as the first primary data set, and the apparatus comprises:
a processing unit, configured to modify at least one piece of first data in the first primary data set into at least one piece of second data, wherein
the processing unit is further configured to generate a logical log file, wherein the logical log file comprises first information, second information, and the at least one piece of second data, the first information indicates the first primary data set, and the second information indicates the at least one piece of first data; and
a sending unit, configured to send the logical log file to the disaster recovery site, wherein the logical log file is used to indicate the disaster recovery site to update the at least one piece of first data in the first disaster recovery data set to the at least one piece of second data.

15. The apparatus according to claim 14, wherein the first information comprises one or more of the following information: a row identifier of a row to which the first primary data set belongs, a hash value of the first primary data set, or the first primary data set.

16. The apparatus according to claim 14 or 15, wherein the second information comprises one or more of the following information: a bitmap or a column identifier of at least one column; and
the bitmap comprises at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs.

17. The apparatus according to any one of claims 14 to 16, wherein the processing unit is further configured to:
generate a first transaction; and
modify the at least one piece of first data in the first primary data set into the at least one piece of second data based on the first transaction, wherein the logical log file further comprises a transaction identifier of the first transaction.

18. The apparatus according to claim 17, wherein the cloud service system further comprises a protection site, and a transmission delay between the apparatus and the protection site is less than a delay threshold;
the processing unit is further configured to obtain a first protection file, wherein a file header of the first protection file comprises a first transaction set, a payload of the first protection file comprises the first information, the second information, and the at least one piece of second data, the first transaction set comprises a transaction identifier of at least one transaction, and the at least one transaction is a transaction generated before the first transaction; and
the sending unit is further configured to send the first protection file to the protection site, for the protection site to store the first protection file.

19. The apparatus according to claim 18, wherein the primary database further comprises a second primary data set, the second primary data set comprises multiple pieces of third data, and the disaster recovery database further comprises a second disaster recovery data set that is the same as the second primary data set;
the processing unit is further configured to: generate a second transaction, wherein the second transaction is a next transaction of the first transaction; modify at least one piece of third data in the second primary data set into at least one piece of fourth data based on the second transaction; and generate a second protection file, wherein a file header of the second protection file comprises a second transaction set, a payload of the second protection file comprises third information, fourth information, and the at least one piece of fourth data, the third information indicates the second primary data set, the fourth information indicates the at least one piece of third data, and the second transaction set comprises the first transaction set and the transaction identifier of the first transaction; and
the sending unit is further configured to send the second protection file to the protection site, for the protection site to store the second protection file.

20. The apparatus according to claim 18 or 19, wherein the apparatus and the protection site are located in a same server room, or the apparatus and the protection site are located in different server rooms in a same availability zone.

21. A data update apparatus, wherein the apparatus is used to a cloud service system, the cloud service system comprises a primary site and the apparatus, a primary database in the primary site comprises a first primary data set, the first primary data set is a row of data in the primary database, the first primary data set comprises multiple pieces of first data, each of the multiple pieces of first data is a column of data in the row of data, a disaster recovery database in the apparatus comprises a first disaster recovery data set that is the same as the first primary data set, and the apparatus comprises:
a receiving unit, configured to receive a logical log file, wherein the logical log file comprises first information, second information, and at least one piece of second data, the first information indicates the first primary data set, the second information indicates at least one piece of first data in the first primary data set, and the at least one piece of first data in the first primary data set is modified into the at least one piece of second data; and
a processing unit, configured to update the at least one piece of first data in the first disaster recovery data set to the at least one piece of second data based on the logical log file.

22. The apparatus according to claim 21, wherein the first information comprises one or more of the following information: a row identifier of a row to which the first primary data set belongs, a hash value of the first primary data set, or the first primary data set.

23. The apparatus according to claim 21 or 22, wherein the second information comprises one or more of the following information: a bitmap or a column identifier of at least one column; and
the bitmap comprises at least one first bit corresponding to the at least one piece of first data and a second bit corresponding to at least one piece of target data, and the at least one piece of target data is data other than the at least one piece of first data in the first primary data set; or the at least one column is a column to which the at least one piece of first data belongs.

24. The apparatus according to any one of claims 21 to 23, wherein the logical log file further comprises a transaction identifier of a first transaction, and the processing unit is configured to:
allocate the first transaction based on the transaction identifier of the first transaction; and
update the at least one piece of first data in the first disaster recovery data set to the at least one piece of second data based on the first information, the second information, and the first transaction.

25. The apparatus according to claim 24, wherein the cloud service system further comprises a protection site, a transmission delay between the primary site and the protection site is less than a delay threshold, the primary database further comprises a second primary data set, the second primary data set comprises multiple pieces of third data, the disaster recovery database further comprises a second disaster recovery data set that is the same as the second primary data set, the protection site stores a second protection file, a file header of the second protection file comprises a second transaction set, a payload of the second protection file comprises third information, fourth information, and at least one piece of fourth data, the third information indicates the second primary data set, the fourth information indicates at least one piece of third data in the second primary data set, the at least one piece of third data in the second primary data set is modified into the at least one piece of fourth data, and the second transaction set comprises the transaction identifier of the first transaction and a transaction identifier of at least one transaction that occurs before the first transaction; and
the processing unit is further configured to:
when the primary site is faulty, obtain the second transaction set based on the transaction identifier of the first transaction comprised in the logical log file;
obtain, from the protection site, the second protection file whose file header comprises the second transaction set; and
update the at least one piece of third data in the second disaster recovery data set to the at least one piece of fourth data based on the payload of the second protection file.

26. The apparatus according to claim 25, wherein the primary site and the protection site are located in a same server room, or the primary site and the protection site are located in different server rooms in a same availability zone.

27. A data update system, wherein the system comprises the apparatus according to any one of claims 14 to 20 and the apparatus according to any one of claims 21 to 26.

28. A computing device cluster, wherein the computing device cluster comprises at least one computing device, each of the at least one computing device comprises at least one processor and at least one memory, the at least one memory stores computer-readable instructions, and the at least one processor executes the computer-readable instructions, for the computing device cluster to perform the method according to any one of claims 1 to 13.

29. A computer-readable storage medium, wherein the computer-readable storage medium stores a computer program, and when the computer program is executed by a computer, the method according to any one of claims 1 to 13 is implemented.

30. A computer program product, wherein the computer program product comprises a computer program, and when the computer program is executed by a processor, the method according to any one of claims 1 to 13 is implemented.
